# EUROPÄISCHE PATENTSCHRIFT

(11) **EP 0 645 294 B1**
(45) Veröffentlichungstag und Bekanntmachung des Hinweises auf die Patenterteilung: **27.08.1997**
(21) Anmeldenummer: 94890153.3
(22) Anmeldetag: 22.09.1994
(51) Int. Cl.: B61H 5/00, B60T 1/06, F16D 65/853

(54) **Fahrzeug, insbesondere Schienenfahrzeug**
Vehicle, in particular railway vehicle
Véhicule, en particulier véhicule ferroviaire

(30) Priorität: 23.09.1993 AT 1924/93
(43) Veröffentlichungstag der Anmeldung: 29.03.1995
(73) Patentinhaber: Siemens SGP Verkehrstechnik GmbH, 1110 Wien (AT)
(72) Erfinder: Krainz, Bruno, Dipl.-Ing., A-2340 Mödling (AT)
(74) Vertreter: Peham, Alois

(56) Entgegenhaltungen:
- EP-A- 0 118 976
- WO-A-93/01424
- DE-A- 3 725 620
- US-A- 3 892 300

## Beschreibung

Die Erfindung betrifft ein Fahrzeug, insbesondere Schienenfahrzeug gemäß dem Oberbegriff des Patentanspruches 1.

Bei elektrisch angetriebenen Schienenfahrzeugen wird angestrebt, daß die elektrische Bremse immer die Hauptarbeit übernimmt, während eine mechanische Bremsung gewöhnlich nur notwendig ist, um das Fahrzeug im Stillstand zu halten, beispielsweise in den Haltestellen. Mit der heutigen Drehstromtechnik ist es möglich, ein Fahrzeug praktisch bis auf Null elektrisch herunterzubremsen.

Auch ist durch die heutigen Möglichkeiten der elektrischen Bremsung eine mechanische Bremse nur in den seltenen Fällen des Ausfalles des elektrischen Bremssystems als Sicherheitsbremse vorgesehen, wobei sie im Fall des Nahverkehrs dann aber für eine gewisse Strecke die Bremsarbeit übernehmen muß, um die betriebliche Störung klein zu halten.

Am verbreitetsten ist eine Konstruktion, bei welcher ein Ritzel des Antriebsmotors direkt ein Großrad auf der Radsatzwelle antreibt. Die dabei meist verwendete Klotzbremse wird mit steigender Fahrgeschwindigkeit kritisch in Bezug auf Erwärmung der Radoberfläche, was im Fall von Hochleistungslokomotiven zu Rissen führen kann. Eine andere Konstruktion verwendet auf der dem Motor gegenüberliegenden Seite des Radsatzes einen eigenen Antrieb am Großrad, an dem fliegend eine Bremsscheibe montiert ist. Weiters gibt es Ausführungen mit einer schnellaufenden Bremsscheibe an der verlängerten Motor- bzw. Ritzelwelle. Diese Anbringungsart einer Bremsscheibe ist jedoch für höhere Motorleistungen bzw. größere Fahrzeuggewichte aufgrund der höheren erforderlichen Bremsleistung problematisch und kann dazu noch Bremsgeräusche hervorrufen.

Daher wurden bei Schienenfahrzeugen mit hoher Motorleistung und großem Gewicht Bremsscheiben auf die Radachse bzw. die diese umgebende Hohlwelle angebaut, was jedoch den Nachteil aufweist, daß der Abstand zwischen dem Motor und der Radachse vergrößert werden muß, um für die Bremsscheiben Platz zu schaffen, sodaß nunmehr ein Zwischenrad im Getriebe erforderlich ist, welches zu einem zusätzlichen Leistungsverlust im Getriebe führt. Auch steht dabei nur ein relativ begrenzter Platz zur Anbringung der Bremsscheiben zur Verfügung.

Durch die US-PS 3 892 300 ist eine Radkonstruktion bekanntgeworden, bei der eine die Räder tragende Felge über ein Planetengetriebe angetrieben wird. Auf einer Verlängerung der Motorwelle sitzt außerhalb des Gehäuses des Planetengetriebes eine Bremsscheibe.

In der DE-OS 37 25 620 ist ein Antriebssystem beschrieben, bei welchem ein Motor über ein Planetengetriebe mit Stütztbremsen eine Gelenkwelle und damit ein Rad antreibt. Diese Stützbremsen dienen nur nur Steuerung des Getriebes, nicht aber die Bremsung des Fahrzeuges. Die eigentliche Leistungsbremse ist wieder außerhalb am Gehäuse der Stützbremse, d.h. außerhalb des Getriebegehäuses, in Umfangsrichtung gelagert.

Die Aufgabe der vorliegenden Erfindung besteht darin, eine auch für hohe Motorleistungen und hohe Fahrzeuggewichte geeignete Bremsanordnung mit ausreichender Bremsleistung zu schaffen, bei der gleizeitig der Verlust an Motorleistung möglichst gering gehalten werden kann und wobei das Platzangebot im Bereich der Radachse gut ausgenützt wird.

Diese Aufgabe wird erfindungsgemäß durch die kennzeichnenden Merkmale des Patentanspruches 1 gelöst.

Damit ist bei geringer Baugröße das Halten des Fahrzeuges im Stillstand ohne hoher Beanspruchung des elektrischen Systems möglich. Ebenso ist die Verwendung als mechanische Sicherheitsbremse bei kompakten Abmessungen der Motor-Getriebe-Einheit möglich, und die erfindungsgemäße Bremsanordnung kann je nach den Anforderungen so ausgelegt werden, daß die Wärmeentwicklung nicht so groß ist, daß die vorliegende Konstruktion im Falle der nur selten nötigen Notbremsung ein Problem darstellt.

Wohl ist durch die nicht vorveröffentlichte österreichische Patentanmeldung A 1877/92 der Anmelderin zur Lösung der gestellten Aufgabe vorgeschlagen worden, die Bremsscheibe auf einer parallel zur Radsatzachse und zur Motorachse angeordneten und zweiseitig an der Motor-Getriebe-Einheit gelagerten Bremswelle anzubringen, welche außerhalb des Getriebegehäuses angeordnet ist. Gegenüber diesem Vorschlag bietet die erfindungsgemäße Konstruktion eine weitere Platzeinsparung.

Nach einem weiteren Merkmal der Erfindung kann das Gehäuse des Getriebes zumindest teilweise mit Öl gefüllt sein.

Im allgemeinen Maschinenbau sind durchaus Lösungen bekannt, bei denen Kupplungen oder Bremsen in einem geschlossenen Gehäuse unter Öl laufen. In diesem Fall besteht die Möglichkeit, das Öl durch einen zusätzlichen Kreislauf zu kühlen und damit eine sehr effiziente Wärmeabfuhr zu erreichen. Es wird in diesem Fall die Temperatur der Bremsscheiben selbst nicht jene Höhe erreichen als bei Anordnungen, bei denen keine Flüssigkeitskühlung vorgenommen wird.

Was die Schmierung der Reibflächen für die Bremsung betrifft, so ist selbstverständlich die Anpreßkraft der Reibelemente gegeneinander so zu dimensionieren, daß im geschmierten Zustand die nötige Umgangskraft für die Bremsung erreicht wird. Bei geschmierten Flächen - und diese Flächen sind von vornherein als geschmiert zu betrachten - ist der Reibungskoeffizient ein sehr gleichmäßiger, sicherlich zuverlässiger als bei nicht geschmierten Flächen. Insbesondere sind die gepaarten Reibflächen nicht den atmosphärischen Umgebungsbedingungen (Nässe, Vereisung) ausgesetzt. Die Wärmeentwicklung in der Bremse ist bekanntlich unabhängig vom Reibwert bzw. der Anpreßkraft, da von vornherein für die Bremsung des Fahrzeuges ein bestimmtes Ausmaß an Energie in Wärme umzuwandeln ist. Ob dies nun mit hoher Anpreßkraft und niedigem Reibungskoeffizient oder mit niedriger Anpreßkraft und hohem Reibungskoeffizient bewerkstelligt wird, ist gleichgültig.

Zur Frage des Bremsabriebes ist zu erwähnen, daß unter entsprechender Auslegung der Anpreßkraft der Reibkörper gegeneinander die Materialwahl weitgehend frei ist. Aus dem allgemeinen Maschinenbau sind z.B. Lamellenkupplungen oder Lamellenbremsen bekannt, welche metallische Werkstoffe gegeneinander drücken, also keine eigentliche Kunststoffreibbeläge, welche entsprechenden Abrieb haben. Natürlich gibt es dafür auch Metalle.

Weiterführende vorteilhafte Erfindungsmerkmale sind in den Unteransprüchen 3 bis 7 gekennzeichnet, für welche die Vorteile aus der nachfolgenden Beschreibung zu entnehmen sind.

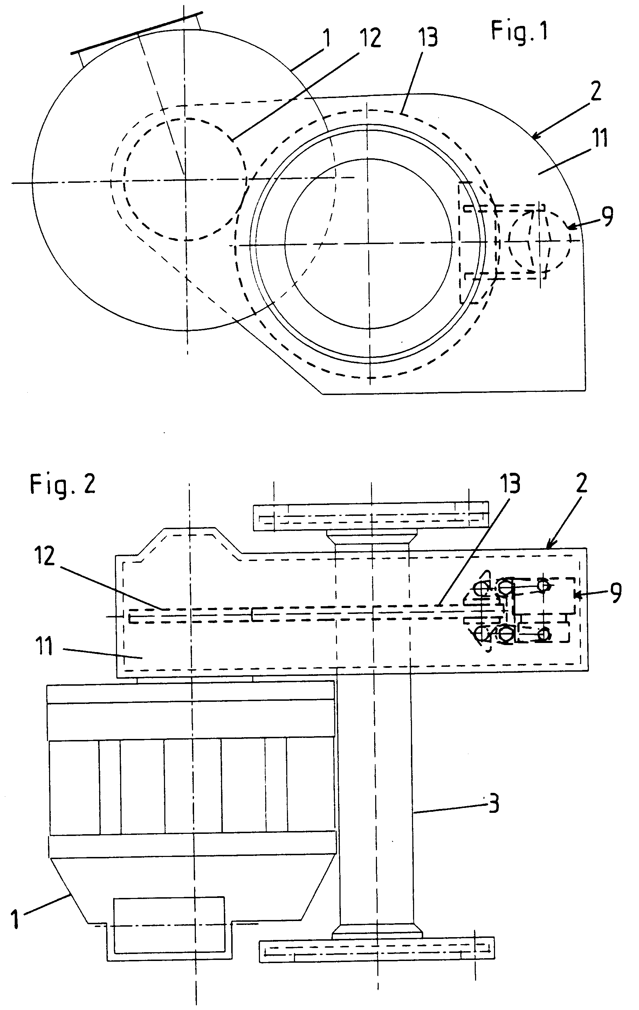

Ein vorteilhaftes Ausführungsbeispiel soll in der nachfolgenden Beschreibung anhand der Zeichnungen näher erläutert werden. Dabei zeigt die Fig. 1 eine Seitenansicht einer Motor-Getriebe-Einheit mit der erfindungsgemäßen Bremsanordnung und Fig. 2 eine Draufsicht auf die Bauteilgruppe der Fig.1.

Mit 1 ist ein Antriebsmotor bezeichnet, an dem ein Getriebe 2 angeflanscht ist, welches ein Gehäuse 11, einen Getriebekasten od. dgl., aufweist, in dem die Getrieberäder untergebracht sind. Im vorliegenden Falle ist es ein auf der Motorwelle sitzendes Ritzel 12, welches mit einem Großrad 13 kämmt, das mit einer Radachse 3 oder einer sie umgebenden Hohlwelle antriebsmäßig verbunden ist. Das Gehäuse 11 kann zumindest teilweise mit Öl gefüllt sein.

Das Großrad 13 ist im vorliegenden Falle als Bremsscheibe ausgebildet und kann zu diesem Zwecke beiderseits mit einem Bremsbelag versehen sein, auf welchen ein Bremssattel 9 bzw. die von diesem getragenen Bremsklötze mit ebenfalls einem Bremsbelag einwirken.

Das Großrad 13 taucht bei den meisten herkömmlichen Konstruktionen ständig in das Öl im Getriebegehäuse 11 ein und im vorliegenden Fall der Ausbildung diese Großrades 13 als Bremsscheibe wird diese daher zumindest teilweise vom Öl benetzt. Damit sind auch die Lager bestens vom Öl geschmiert und darüberhinaus kann das Öl auch zur Kühlung der Bremsscheibe und der übrigen Teile der Bremsanordnung dienen. Dazu wird es vorteilhafterweise durch einen Kühlkreislauf geführt, in dem zumindest ein Ölkühler oder eine ähnliche Vorrichtung vorgesehen ist.

Die erfindungsgemäße Bremsanordnung kann für jede Art von Antrieben, z. B. bei Lokomotiven, Triebdrehgestellen, Antrieben für Losräder oder Radachsen u.a. verwendet werden.

Selbstverständlich sind im Rahmen der Erfindung verschiedene konstruktive Abänderungen möglich. So ist es denkbar, das Getriebe mit jeder notwendigen Anzahl von Getrieberädern auszustatten, wobei jedes derselben durch beidseitige Anbringung von Bremsbelägen als Bremsscheibe ausgebildet werden kann.

Weiters besteht die Möglichkeit, auch ein zusätzliches, vom Getriebe oder indirekt vom Motor über ein Zwischengetriebe angetriebenes, als Bremsscheibe ausgebildetes Rad vorzusehen, welches im Gehäuse 11 untergebracht ist. Damit ist eine größere Freiheit in der gegenseitigen baulichen Anordnung der einzelnen Baugruppen gegeben.

Denkbar ist auch das Antriebsritzel 12 als Bremsscheibe auszubilden oder die Bremsscheibe direkt auf die Antriebswelle des Motors zu setzen, was die unmittelbarste Bremseinwirkung gewährleistet.

Schließlich besteht die Möglichkeit, auf den Wellen der Getrieberäder eigene Bremsscheiben oder auch Bremstrommeln vorzusehen, welche sich innhalb des Gehäuses 11 befinden. Ein Vorteil aller Konstruktionen besteht darin, daß die Lager der Bremsscheiben - wie immer sie ausgebildet sind - keine eigenen Schmiereinrichtungen besitzen müssen, da sie vom Öl des Getriebegehäuses 11 versorgt, d. h. mit diesem zumindest teilweise benetzt werden können, insbesondere wenn die Bremsscheiben in das Öl zumindest teilweise eintauchen.

Die für die Bremsung des Fahrzeuges nötige Umfangskraft kann auch bei geschmierten Bremsscheiben durch entsprechende Erhöhung der Anpreßkraft der Reibelemente erreicht werden, wobei sich die Vergleichmäßigung des Reibungskoeffizienten für die Dosierbarkeit der Bremsung positiv erweist. Die Wärmeentwicklung ist von der bei der Bremsung umzuwandelnden Energie abhängig und ob dies mit hoher Anpreßkraft und niedrigem Reibungskoeffizienten oder niedrigerer Anpreßkraft und hohem - dafür oft ungleichmäßigem - Reibungskoeffizienten bewerkstelligt wird, ist gleichgültig. Die Ölbenetzung der Bremsscheiben ist dabei durch die Kühlwirkung vorteilhaft und aufgrund der geringeren Temperaturen, welche die Bremsscheiben erreichen, sind auch allfällige Probleme, insbesondere wärmetechnischer Art, beim erfindungsgemäßen Einbau der Bremsscheibe oder Bremsscheiben in das geschlossene Getriebegehäuse auf ein Minimum reduziert.

Durch die Auswahl entsprechender Materialien, vorzugsweise metallischer Werkstoffe, für Bremsbeläge und Reibflächen ist auch das Problem des Abriebes und der Verunreinigung des Öls im Getriebegehäuse im Rahmen der vorgesehenen Ölwechselvorgänge zu bewältigen.

## Patentansprüche

1. Fahrzeug, insbesondere Schienenfahrzeug, mit einer gekoppelten Motor-Getriebe-Einheit, die Räder antreibt, mit einer Bremsanordnung, mit zumindest einer angetriebenen Radachse und mit mindestens einer damit antriebsmäßig verbundenen Bremsscheibe oder Bremstrommel, dadurch gekennzeichnet, daß die Bremsscheibe oder Bremstrommel innerhalb des Gehäuses (11) des Getriebes (2) der Motor-Getriebe-Einheit vorgesehen ist.

2. Fahrzeug nach Anspruch 1, dadurch gekennzeichnet, daß das Gehäuse (11) des Getriebes (2) zumindest teilweise mit Öl gefüllt ist.

3. Fahrzeug nach Anspruch 1, dadurch gekennzeichnet, daß eine direkt vom Motor angetriebene Bremsscheibe, beispielsweise auf der Antriebswelle sitzend, vorgesehen ist.

4. Fahrzeug nach Anspruch 1, dadurch gekennzeichnet, daß eine indirekt, beispielsweise über ein Zwischengetriebe, vom Motor angetriebene Bremsscheibe vorgesehen ist.

5. Fahrzeug nach Anspruch 1 oder 3, bei welcher ein Antriebsritzel des Motors mit einem Großrad der Radachse oder einer sie umgebenden Hohlwelle kämmt, dadurch gekennzeichnet, daß das Großrad (13) als Bremsscheibe ausgebildet ist.

6. Fahrzeug nach Anspruch 2, dadurch gekennzeichnet, daß die Bremsscheibe (13) und/oder deren Lagerung zumindest teilweise vom im Getriebegehäuse (11) befindlichen Öl benetzt wird, beispielsweise in das Öl zumindest teilweise eintaucht.

7. Fahrzeug nach den Ansprüchen 2 und 6, dadurch gekennzeichnet, daß zumindest das die Bremsscheibe (13) benetzende Öl durch einen Kühlkreislauf geführt ist.

## Claims

1. Vehicle, in particular railway vehicle, having a coupled motor/gear unit which drives wheels, a brake arrangement, at least one driven wheel axle, and at least one brake disc or brake drum in drive connection with said wheel axle, characterized in that the brake disc or brake drum is provided inside the casing (11) of the gear (2) of the motor/gear unit.

2. Vehicle according to Claim 1, characterized in that the casing (11) of the gear (2) is at least partly filled with oil.

3. Vehicle according to Claim 1, characterized in that a brake disc driven directly by the motor and sitting, for example, on the drive shaft is provided.

4. Vehicle according to Claim 1, characterized in that a brake disc driven indirectly by the motor, for example via an intermediate gear, is provided.

5. Vehicle according to Claim 1 or 3, in which a drive pinion of the motor meshes with a large gearwheel of the wheel axle or a hollow shaft surrounding the latter, characterized in that the large gearwheel (13) is designed as a brake disc.

6. Vehicle according to Claim 2, characterized in that the brake disc (13) and/or its bearing arrangement is at least partly wetted by oil, for example at least partly dips into the oil which is located in the gear casing (11).

7. Vehicle according to Claims 2 and 6, characterized in that at least the oil wetting the brake disc (13) is passed through a cooling circuit.

## Revendications

1. Véhicule, notamment véhicule ferroviaire, comportant une unité moteur-transmission couplée, qui entraîne des roues, comportant un dispositif de freinage, au moins un essieu entraîné et au moins un disque de freinage ou un tambour de freinage relié à celui-ci en entraînement, caractérisé en ce que le disque de freinage ou le tambour de freinage est prévu à l'intérieur de la boîte (11) de la transmission (2) de l'unité moteur-transmission.

2. Véhicule suivant la revendication 1, caractérisé en ce que la boîte (11) de la transmission (2) est remplie au moins partiellement d'huile.

3. Véhicule suivant la revendication 1, caractérisé en ce qu'il est prévu un disque de freinage entraîné directement par le moteur, par exemple fixé à l'arbre d'entraînement.

4. Véhicule suivant la revendication 1, caractérisé en ce qu'il est prévu un disque de freinage entraîné indirectement par le moteur, par exemple par l'intermédiaire d'une transmission intermédiaire.

5. Véhicule suivant la revendication 1 ou 3, dans lequel un pignon d'entraînement du moteur engrène avec une roue de l'essieu ou d'un arbre creux l'entourant, caractérisé en ce que la roue (13) est sous forme de disque de freinage.

6. Véhicule suivant la revendication 2, caractérisé en ce que le disque (13) de freinage et/ou son logement est humecté au moins partiellement de l'huile se trouvant dans la boîte (11) de transmission et plonge par exemple au moins partiellement dans l'huile.

7. Véhicule suivant les revendications 2 et 6, caractérisé en ce qu'au moins l'huile humectant le disque (13) de freinage passe dans un circuit de refroidissement.
